# EUROPEAN PATENT APPLICATION

(11) **EP 4 838 800 A1**
(43) Date of publication of application: **11.11.2026**
(21) Application number: 24916418.7
(22) Date of filing: 05.09.2024
(51) Int. Cl.: H04B 7/06

(54) **PRECODING MATRIX INFORMATION SENDING METHOD, PRECODING MATRIX INFORMATION RECEIVING METHOD, DEVICE, AND STORAGE MEDIUM**

(30) Priority: 08.01.2024 CN 202410031982
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); LI, Lun, Shenzhen, Guangdong 518057 (CN); XIAO, Huahua, Shenzhen, Guangdong 518057 (CN); LIU, Wenfeng, Shenzhen, Guangdong 518057 (CN); WEI, Xingguang, Shenzhen, Guangdong 518057 (CN)
(74) Representative: Ziebig Hengelhaupt Intellectual Property Attorneys Patentanwaltskanzlei PartGmbB
(86) International application number: PCT/CN2024/117244
(87) International publication number: WO 2025/148366

(57) **Abstract**

Embodiments of the present invention provide a precoding matrix information sending method, a precoding matrix information receiving method, a device, and a storage medium. The precoding matrix information sending method comprises: a first node receiving first information from a second node, the first information being used for indicating a first codeword set, and the first codeword set comprising at least one matrix, and on the basis of the first codeword set, and a channel state between the first node and the second node, sending precoding matrix information to the second node, the precoding matrix information being used for indicating a precoding matrix corresponding to the channel state in the codeword set.

## Description

The present disclosure claims the priority to the Chinese Patent Application No. 202410031982.4, filed on January 8, 2024, the entire content of which is incorporated herein by reference.

### TECHNICAL FIELD

The present disclosure relates to the technical field of communications, and in particular, to methods for sending and receiving precoding matrix information, an apparatus, and a storage medium.

### BACKGROUND

A multi-antenna system is an important technology in the communication field, whose core is a multi-antenna technology. The Multi-antenna may be used to suppress channel fading, where data may be transmitted by space division multiplexing, thereby improving signal stability and spectrum utilization. In the multi-antenna system, a precoding matrix is an important concept. The precoding matrix is a method for preprocessing a transmission signal on a transmission side, by optimizing power, a rate and even a transmission direction loaded on each data stream, to obtain better performance.

### SUMMARY

The present disclosure provides methods for sending and receiving precoding matrix information, an apparatus, and a storage medium, which may improve the accuracy of the transmission of the precoding matrix information.

In a first aspect, the present disclosure provides a method for sending precoding matrix information, applied to a first node. The method for sending precoding matrix information includes: receiving first information from a second node, where the first information is used to indicate a first codeword set, and the first codeword set includes at least one matrix; and sending the precoding matrix information to the second node according to the first codeword set and a channel state between the first node and the second node. The precoding matrix information is used to indicate a precoding matrix corresponding to the channel state, in the first codeword set.

In a second aspect, the present disclosure provides a method for receiving precoding matrix information, applied to a second node. The method for receiving precoding matrix information includes: sending first information to a first node, where the first information is used to indicate a first codeword set, and the first codeword set includes at least one matrix; and receiving precoding matrix information sent from the first node. The precoding matrix information is determined based on the first codeword set and a channel state between the first node and the second node.

In a third aspect, the present disclosure provides a communication apparatus, and the communication apparatus includes: a receiving module, configured to receive first information from a second node, where the first information is used to indicate a first codeword set, and the first codeword set includes at least one matrix; and a sending module, configured to send precoding matrix information to the second node according to the first codeword set and a channel state between the first node and the second node. The precoding matrix information is used to indicate a precoding matrix corresponding to the channel state, in the codeword set.

In a fourth aspect, the present disclosure provides another communication apparatus, and the communication apparatus includes: a sending module, configured to send first information to a first node, where the first information is used to indicate a first codeword set, and the first codeword set includes at least one matrix; and a receiving module, configured to receive precoding matrix information sent from the first node. The precoding matrix information is determined based on the first codeword set and a channel state between the first node and the second node.

In a fifth aspect, the present disclosure provides yet another communication apparatus, and the communication apparatus includes: a memory and a processor. The memory is coupled to the processor; the memory is configured to store instructions executable by the processor; and the processor, upon executing the instructions, performs the method according to the first aspect or the second aspect.

In a sixth aspect, the present disclosure provides a computer program product containing computer instructions, and when the computer instructions are run on a computer, the computer performs the method according to the first aspect or the second aspect.

### BRIEF DESCRIPTION OF THE DRAWINGS

The drawings are used to provide a further understanding of the technical solutions of the present disclosure and constitute a part of the specification, and are used together with the embodiments of the present disclosure to explain the technical solutions of the present disclosure, but do not constitute a limitation on the technical solutions of the present disclosure.
FIG. 1 is a schematic diagram of an architecture of a communication system according to the embodiments of the present disclosure.
FIG. 2 is a schematic flowchart of a method for sending precoding matrix information according to the embodiments of the present disclosure.
FIG. 3 is a schematic flowchart of a method for receiving precoding matrix information according to the embodiments of the present disclosure.
FIG. 4 is a compositional schematic diagram of a communication apparatus according to the embodiments of the present disclosure.
FIG. 5 is a compositional schematic diagram of another communication apparatus according to the embodiments of the present disclosure.
FIG. 6 is a structural schematic diagram of a communication apparatus according to the embodiments of the present disclosure.

### DETAILED DESCRIPTION

The following will describe the technical solutions in the embodiments of the present disclosure clearly and completely, in conjunction with the drawings in the embodiments of the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

In the description of the present disclosure, unless otherwise stated, "/" means "or", for example, A/B may represent A or B. "And/or" herein is only to describe an association relationship of associated objects, representing that three relationships may exist, for example, A and/or B may represent three cases of: A alone, both A and B, and B alone. In addition, "at least one" refers to one or more, and "a plurality of/multiple" refers to two or more. The expressions such as "first" and "second", etc., do not limit the number and execution order, and the expressions such as "first" and "second", etc., do not necessarily limit to different items.

It should be noted that, in the present disclosure, the words, "exemplary (exemplarily)" or "for example", etc., are used to describe an example, an illustration, or an explanation. Any embodiment or design solution described with "exemplary (exemplarily)" or "for example", etc., in the embodiments of the present disclosure should not be construed as preferred or advantageous over other embodiments or designs. Rather, the usage of the words, "exemplary (exemplarily)" or "for example", etc., is intended to present relevant concepts in a specific manner.

In wireless communication technologies, for example, the fourth generation, the fourth generation long term evolution (LTE) technology, the fifth generation new radio (NR) technology, etc., an orthogonal frequency division multiplexing (OFDM) technology is used for multi-carrier modulation, which may effectively combat frequency selective fading, overcome inter-symbol interference (ISI) of signals, thereby achieving a high-speed data transmission. In the OFDM technology, the smallest frequency domain unit is a subcarrier, and the smallest time domain unit is an OFDM symbol. For the convenience of using frequency domain resources, a resource block (RB) is defined, and a resource block includes a specific number of continuous subcarriers. A bandwidth block (bandwidth part, BWP) is also defined, and a bandwidth block includes a specific number of continuous resource blocks on a carrier. In addition, for the convenience of using time domain resources, a slot is also defined, and a slot includes a specific number of continuous OFDM symbols.

In a communication system, a base station may send a reference signal. Then, a terminal receives and measures the reference signal sent from the base station, determines channel state information of a channel between the base station and the terminal, and reports the channel state information to the base station. The base station receives the channel state information, determines a data transmission strategy according to a channel state indicated by the received channel state information, and transmits data based on the strategy, thereby improving the efficiency of the data transmission. The accuracy of the channel state indicated by the channel state information affects the transmission strategy, thereby affecting the efficiency of the data transmission.

The reference signal sent from the base station to the terminal is a downlink reference signal. In an LTE system, a downlink reference signal used for channel state information reporting includes a cell-specific reference signal (CRS) and a channel-state information reference signal (CSI-RS). In an NR system, a downlink reference signal used for channel state information reporting includes a channel-state information reference signal (CSI-RS). The channel state information reference signal is carried by a channel state information reference signal resource (CSI-RS Resource), and the channel state information reference signal resource is composed of code division multiplexing group(s) (code division multiple group(s), CDM group(s)). A CDM group is composed of radio resource element(s), on which CSI-RSs of a group of CSI-RS ports are multiplexed by code division multiplexing.

In some embodiments, a content of the channel state information transmitted between the base station and the terminal includes a channel quality indicator (CQI), where the indicator is used to indicate a quality of the channel. Alternatively, the content of the channel state information transmitted between the base station and the terminal includes a precoding matrix indicator (PMI), used to indicate a precoding matrix applied to an antenna of the base station. A type of CQI reporting format is wideband CQI reporting, that is, reporting a channel quality for a channel state information reporting frequency band (CSI reporting band), where the channel quality corresponds to the entire channel state information reporting frequency band. Another type of CQI reporting format is subband CQI reporting, that is, giving channel qualities for the channel state information reporting frequency band (CSI reporting band) in units of subbands, where a channel quality corresponds to a subband, that is, reporting a channel quality for each subband of the channel state information reporting frequency band. A subband refers to a frequency domain unit, which is defined as N continuous resource blocks (RBs), where N is a positive integer. For the convenience of description, in the present disclosure, the N continuous resource blocks are referred to as a channel quality indication subband, or a CQI subband, or a subband. N is referred to as a size of a CQI subband, or a CQI subband size, or a subband size. A bandwidth block (BWP, Bandwidth part) is divided into subbands, and a channel state information reporting frequency band (CSI reporting band) is defined by a subset of subbands of the bandwidth block (BWP, Bandwidth part). The channel state information reporting frequency band (CSI reporting band) is a frequency band on which channel state information needs to be reported.

A method for determining a channel quality is based on strength of a reference signal received by the terminal. Another method for determining a channel quality is based on a signal to interference plus noise ratio of a received reference signal. On the channel state information reporting frequency band, in a case where the channel quality does not vary greatly, the CQI may be reported by wideband CQI reporting, which may reduce resource overhead used for CQI reporting. In a case where the channel quality differs greatly across the frequency domain, the CQI may be reported by subband CQI reporting, which may increase the accuracy of CQI reporting.

In some embodiments, a type of PMI reporting format is wideband PMI reporting, that is, reporting a PMI for a channel state information reporting frequency band (CSI reporting band), where the PMI corresponds to the entire channel state information reporting frequency band. Another type of PMI reporting format is subband PMI reporting, that is, reporting a PMI for each subband of the channel state information reporting frequency band, or reporting a component of a PMI for each subband of the channel state information reporting frequency band. For example, PMI is composed of X1 and X2, and a method for reporting a component of a PMI for each subband of the channel state information reporting frequency band is: reporting an X1 for the entire frequency band, and reporting an X2 for each subband; another method is: reporting an X1 and an X2 for each subband.

In some embodiments, yet another type of PMI reporting format is that the reported PMI indicates R precoding matrices for each subband, where R is a positive integer. In the sense of a frequency domain granularity for feeding back precoding matrices, R also represents a number of precoding matrix subbands included in each subband, or a number of precoding matrix subbands included in each CQI subband.

The above channel state information transmitted between the base station and the terminal includes precoding matrix information. The precoding matrix information is used to indicate a precoding matrix applied to a transmission antenna, for preprocessing the transmission signal on the transmission side, to improve the efficiency of the data transmission. Currently, a transmission method for the precoding matrix information includes the following methods.

In an implementation, a codeword set for quantizing a precoding matrix, i.e., a codebook, is predefined. The terminal may quantize the precoding matrix according to the codeword set, and then feed back quantized precoding matrix information to the base station. The accuracy of the quantized precoding matrix fed back by the terminal to the base station is low. In order to improve the accuracy, a size of the precoding matrix set may be increased, that is, a precoding matrix set containing more codewords is used, but this increases resource overhead for the terminal to feed back the precoding matrix information.

In another implementation, the base station pre-trains a pair of encoding model and decoding model, transmits the encoding model to the terminal, the terminal encodes the precoding by using the encoding model, and feeds back encoded precoding information to the base station; the base station uses the decoding model to recover the precoding matrix from the encoded precoding information. Since the encoding model is trained from the base station, the encoding model does not adapt to the structure of the deployed terminal, so that the efficiency of the terminal operating the encoding model is low, and the accuracy of the precoding matrix is affected.

In yet another implementation, the terminal pre-trains a pair of encoding model and decoding model, transmits the decoding model to the base station, the terminal encodes the precoding by using the encoding model, and feeds back encoded precoding information to the base station; the base station uses the decoding model to recover the precoding matrix from the encoded precoding information. Since the decoding model is trained from the terminal, the decoding model does not adapt to the structure of the deployed base station, so that the efficiency of the base station operating the encoding model is low, and the accuracy of the precoding matrix is affected.

To sum up, since the wireless channel has random, complex and volatile characteristics, current precoding technologies cause a reduction in a matching degree between a precoding matrix and a channel state, and further reduce the performance of the system in transmitting data, so how to design a reasonable transmission method of a precoding matrix, to improve the accuracy of the precoding matrix information without increasing overhead resources required for the transmission, is an urgent problem to be solved in related art.

In view of this, the present disclosure provides a method for sending precoding matrix information, applied to a first node. The method for sending precoding matrix information includes: receiving first information from a second node, where the first information is used to indicate a first codeword set, and the first codeword set includes at least one matrix; and sending the precoding matrix information to the second node according to the first codeword set and a channel state between the first node and the second node. The precoding matrix information is used to indicate a precoding matrix corresponding to the channel state, in the codeword set. In this way, the precoding matrix may be determined based on the first codeword set determined at the second node, where the first codeword set may be a codeword set determined by the second node based on the channel state and adapted to a channel scenario. Thus, the precoding matrix determined from the first codeword set based on the channel state matches the channel state, thereby improving the accuracy of the precoding matrix.

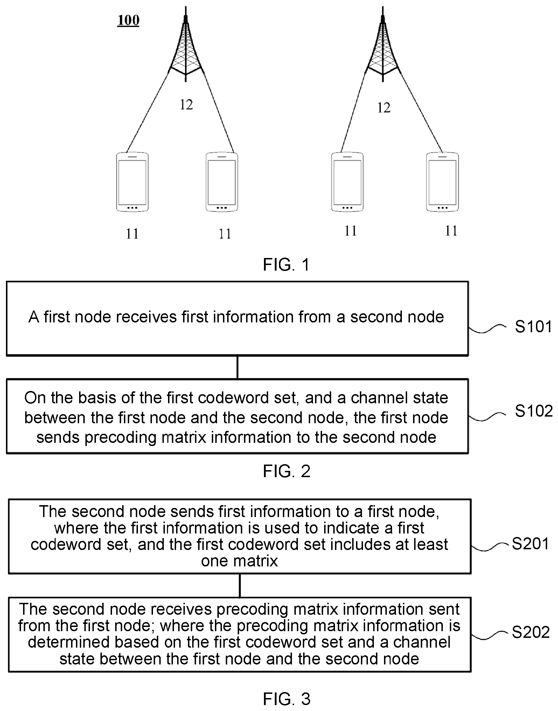

The method for sending precoding matrix information provided in the embodiments of the present disclosure may be applied to various communication systems. For example, the various communication systems may be a long term evolution system, a 5G communication system, a Wi-Fi (wireless fidelity) system, a communication system related to the 3rd generation partnership project (3GPP), a future evolved communication system (such as a sixth generation (6G) communication system, etc.), or a multi-system fusion system, etc., which is not limited thereto. The method for sending precoding matrix information provided in the embodiments of the present disclosure is described below by taking a communication system 100 shown in FIG. 1 as an example. FIG. 1 is only a schematic diagram, and does not constitute a limitation on applicable scenarios of the technical solutions provided in the present disclosure.

FIG. 1 is a schematic diagram of an architecture of a communication system according to the embodiments of the present disclosure. As shown in FIG. 1, the communication system 100 may include one or more first nodes 11 and one or more second nodes 12. The second node 12 may be communicatively connected to one or more first nodes 11.

In some embodiments, in the communication system 100, the first node 11 and the second node 12 communicate via a wireless channel. For example, the first node 11 is a terminal device, the second node 12 is a network device, and the network device and the terminal device communicate via a wireless channel. For another example, the first node 11 is a terminal device, the second node 12 is a wireless router, and the wireless router and the terminal device communicate via a wireless channel.

The network device may be used to implement functions such as resource scheduling, radio resource management, and radio access control for the terminal device. For example, the network device may be an evolution base station (evolution nodeB, eNB), a next generation base station (generation nodeB, gNB), a receiving and transmitting point (transmission and reception point, TRP), a transmission point (TP), and a certain type of other access node. According to a size of the provided service coverage area, the base station may be classified into a macro base station for providing a macro cell (Macro cell), a micro base station for providing a pico cell (Pico cell) and a femto base station for providing a femto cell (Femto cell). With the continuous evolution of wireless communication technologies, other names for future base stations may also be adopted.

The terminal device may also be referred to as a terminal, user equipment (UE), a mobile station, a mobile terminal, etc. Exemplarily, the terminal device may be a mobile phone, a tablet computer, a computer with a wireless transceiving function, a virtual reality terminal, an augmented reality terminal, a wireless terminal in industrial control, a wireless terminal in unmanned driving, a wireless terminal in remote surgery, a wireless terminal in transportation safety, a wireless terminal in a smart city, a wireless terminal in a smart home, etc. The embodiments of the present disclosure do not limit the device form adopted by the terminal.

Exemplarily, the first node 11 is a first base station, the second node 12 is a second base station, and the first base station and the second base station communicate via a wireless channel. For another example, the first node 11 is a first terminal, the second node 12 is a second terminal, and the first terminal and the second terminal communicate via a wireless channel. For another example, the first node 11 is a repeater, the second node 12 is a base station, and the base station and the repeater communicate via a wireless channel. For another example, the first node 11 is a terminal, the second node 12 is a repeater, and the repeater and the terminal communicate via a wireless channel. For another example, the first node 11 is a first repeater, the second node 12 is a second repeater, and the first repeater and the second repeater communicate via a wireless channel. For another example, the first node 11 is a base station, the second node 12 is a satellite, and the satellite and the base station communicate via a wireless channel. For another example, the first node 11 is a satellite, the second node 12 is a base station, and the base station and the satellite communicate via a wireless channel. For another example, the first node 11 is a terminal, the second node 12 is a satellite, and the satellite and the terminal communicate via a wireless channel. For another example, the first node 11 is a satellite, the second node 12 is a terminal, and the terminal and the satellite communicate via a wireless channel. For another example, the first node 11 is a ground device, the second node 12 is an aircraft, and the aircraft and the ground device communicate via a wireless channel. For another example, the first node 11 is a first aircraft, the second node 12 is a second aircraft, and the first aircraft and the second aircraft communicate via a wireless channel.

It should be noted that FIG. 1 is only an exemplary framework diagram, and the number of devices or nodes and the names of the devices included in FIG. 1 are not limited, and in addition to the functional nodes shown in FIG. 1, the communication system may further include other nodes or devices, such as a core network device.

The system architecture and service scenarios described in the embodiments of the present disclosure are intended to more clearly illustrate the technical solutions of the embodiments of the present disclosure, and do not constitute a limitation on the technical solutions provided in the embodiments of the present disclosure. Those ordinary skilled in the art may know that, with the evolution of network architectures and the emergence of new service scenarios, the technical solutions provided in the embodiments of the present disclosure are also applicable to similar technical problems.

The embodiments provided in the present disclosure are introduced below with reference to the drawings of the specification.

As shown in FIG. 2, it is a method for sending precoding matrix information according to the present disclosure, and the method for sending precoding matrix information is applied to a first node. The method for sending precoding matrix information includes the following S101 and S102.

In S101: the first node receives first information from a second node.

The first information is used to indicate a first codeword set, and the first codeword set includes at least one matrix.

The above at least one matrix included in the first codeword set may be understood as a candidate precoding matrix, that is, a precoding matrix may be selected from the at least one matrix included in the first codeword set. In some embodiments, a matrix in the first codeword set may be determined by the second node based on a channel state of a channel between the first node and the second node, so that the precoding matrix determined based on the first codeword set has a higher degree of adaptation to the channel state.

In some embodiments, the above first information includes the first codeword set, which for example, may include at least one of: the first information including elements in the first codeword set; the first information including information used to indicate a generation method for the first codeword set; the first information including a generation method for the first codeword set.

In an example, the first information may include elements in the first codeword set, where the element refers to a matrix in the first codeword set, so that the first node may obtain the first codeword set based on the first information from the second node.

In another example, the matrix in the first codeword set may be generated based on a certain generation method, thus the first information may include the generation method for the first codeword set or information used to indicate the generation method, so that the first node may obtain the generation method based on the first information from the second node, and then generate the first codeword set based on the generation method.

In some embodiments, the first information may further include a generation element of the matrix in the first codeword set, so that the first node may generate the first codeword set based on the generation element and a preset generation method. In this way, the resource overhead required for transmitting the first information is smaller, thereby saving transmission resources of the system. In some embodiments, the first information may further include a generation element of the matrix in the first codeword set, and the generation method for the first codeword set or information used to indicate the generation method.

It should be noted that, based on the implementations of the above first information, the first node may obtain the first codeword set according to the first information from the second node. Thus, the second node may update the generation method or compositional element through the first information, and then update the first codeword to obtain the first codeword set, which is relatively flexible and more easily adapts to the channel state.

In some embodiments, the generation method for the first codeword set includes: a function for generating the first codeword set, or a machine learning model for generating the first codeword set.

An input set of the above function or machine learning model includes a random number set or a continuous integer set or an integer set, and an output set of the function or machine learning model is used to determine the first codeword set.

Taking the generation method for the first codeword set being the function for generating the first codeword set as an example, the generation of the first codeword set may have at least the following examples.

In an example, an input set of the function may be a random number set, and an output set of the function is a matrix set. The above first codeword set may be determined based on the output set, or the output set may be the first codeword set. It should be noted that, since the input set of the function is a random number set, and the complexity of generating the random number set is not high, the complexity of the system may be reduced based on the generation method.

In another example, an input set of the function may be an integer set, and an output set of the function is a matrix set. The above first codeword set may be determined based on the output set, or the output set may be the first codeword set. It should be noted that, since the generation of the integer set has a smaller calculation amount, and the storage space required for the integer set is small, the complexity of the system is reduced.

In yet another example, an input set of the function may be a continuous integer set, that is, a set composed of continuous integers, and an output set of the function is a matrix set, the above first codeword set may be determined based on the output set, or the output set may be the first codeword set. It should be noted that, since the set composed of continuous integers is easy to record or store, for example, the continuous integer set may be recorded only by recording a starting value and a data number, or by recording a starting value and an ending value, thereby reducing the complexity of the system.

Moreover, based on the above examples, transmitting the function for generating the first codeword set, or information indicating the function for generating the first codeword set, saves transmission resource overhead, compared to transmitting all elements in the first codeword set. Alternatively, transmitting the function for generating the first codeword set, or information indicating the function for generating the first codeword set, and transmitting an integer set or a set composed of continuous integers, may also save transmission resource overhead, compared to transmitting all elements in the first codeword set. In addition, the complexity of the system may also be reduced.

Taking the generation method for the first codeword set being a machine learning model for generating the first codeword set as an example, the generation of the first codeword set may have at least the following examples.

In an example, an input set of the machine learning model may be a random number set, and an output set of the machine learning model is a matrix set. The above first codeword set may be determined based on the output set, or the output set may be the first codeword set. It should be noted that, since the input set of the machine learning model is the random number set, and the complexity of generating the random number set is not high, the complexity of the system may be reduced based on the generation method.

In another example, an input set of the machine learning model may be an integer set, and an output set of the machine learning model is a matrix set. The above first codeword set may be determined based on the output set, or the output set may be the first codeword set. It should be noted that, since the generation of the integer set has a smaller calculation amount, and the storage space required for the integer set is small, the complexity of the system is reduced.

In yet another example, an input set of the machine learning model may be a continuous integer set, that is, a set composed of continuous integers, and an output set of the machine learning model is a matrix set. The above first codeword set may be determined based on the output set, or the output set may be the first codeword set. It should be noted that, since a set composed of continuous integers is easy to record or store, for example, the continuous integer set may be recorded only by recording a starting value and a data number, or by recording a starting value and an ending value, thereby reducing the complexity of the system.

Moreover, based on the above examples, transmitting the machine learning model for generating the first codeword set, or information indicating the machine learning model for generating the first codeword set, saves transmission resource overhead, compared to transmitting all elements in the first codeword set. Alternatively, transmitting the machine learning model for generating the first codeword set, or information indicating the machine learning model for generating the first codeword set, and transmitting an integer set or a set composed of continuous integers, may also save transmission resource overhead, compared to transmitting all elements in the first codeword set. In addition, the complexity of the system may also be reduced.

In S102: the first node sends precoding matrix information to the second node according to the first codeword set and a channel state between the first node and the second node.

The precoding matrix information is used to indicate a precoding matrix corresponding to the channel state, in the codeword set.

In some embodiments, the first node may determine the precoding matrix information according to the first codeword set, and then send the precoding matrix information to the second node.

Exemplarily, the first node may generate the precoding matrix information based on the first codeword set, that is, the first node may determine, according to the channel state, a codeword of the precoding matrix, an identifier of the codeword, or an index number of the codeword, from the first codeword set. For example, the first node finds, from the first codeword set, a codeword close to the channel state, an identifier of the codeword, or an index number of the codeword, according to the channel state. For another example, the first node determines, from the first codeword set, a codeword with a similarity to the channel state exceeding a threshold, or an identifier of the codeword, or an index number of the codeword, according to the channel state.

In an example, the first node may traverse all codewords in the first codeword set, to find a codeword that can represent the channel state from the perspective of the precoding matrix, or an identifier of the codeword, or an index number of the codeword.

In another example, the first node may use the channel state as an input of a function, and obtain a codeword of the precoding matrix, or an identifier of the codeword, or an index number of the codeword, from an output of the function. The function is determined based on the first codeword set. For example, the function is determined based on statistics of elements in the first codeword set. For another example, the function is obtained based on a function for generating the first codeword set. For another example, the function is obtained based on a parameter of the generation function for the first codeword set.

It should be noted that, the first node generates the precoding matrix information from the first codeword set through the function, without traversing the codewords in the first codeword set, thus the method for generating the precoding matrix information based on the example may save calculation amount, reduce the complexity of the system, and improve the efficiency of obtaining the precoding matrix information.

In yet another example, the first node may use the channel state as an input of a machine learning model, and obtain a codeword of the precoding matrix, or an identifier of the codeword, or an index number of the codeword, from an output of the machine learning model. The machine learning model is determined based on the first codeword set. For example, the machine learning model is determined based on statistics of elements in the first codeword set. For another example, the machine learning model is obtained based on a machine learning model for generating the first codeword set. For another example, the machine learning model is obtained based on a parameter of the machine learning model for generating the first codeword set. It should be noted that, the first node generates the precoding matrix information from the first codeword set through the machine learning model, without traversing the codewords in the first codeword set, thus the method for generating the precoding matrix information based on the example may save calculation amount, reduce the complexity of the system, and improve the efficiency of obtaining the precoding matrix information.

In some embodiments, the first node may determine, based on the first codeword set, a component element of a codeword that is the precoding matrix, or an identifier of the component element, or an index number of the component element.

In some embodiments, the first node may send the precoding matrix information to the second node according to a second codeword set and the channel state between the first node and the second node.

The second codeword set is a subset of the first codeword set. Moreover, the precoding matrix information includes an index number or an identifier of a precoding matrix corresponding to the channel state, in the second codeword set.

It should be understood that, the second codeword set is a subset of the first codeword set, that is, the number of matrices in the second codeword set is less than that in the first codeword set. Thus, the resource overhead for the first node to transmit the precoding matrix information generated based on the second codeword set is reduced.

In an example, the precoding matrix information includes an index number of a precoding matrix corresponding to the channel state, in the second codeword set. Since the number of codewords in the second codeword set is less than the number of codewords in the first codeword set, and a codeword is a candidate precoding matrix, the resource overhead for the index number of the precoding matrix in the second codeword set is less than the resource overhead for the index number of the precoding matrix in the first codeword set, so that the first node generating the precoding matrix information based on the second codeword set, compared to generating the precoding matrix information based on the first codeword set, reduces the resource overhead for the first node to transmit the precoding matrix information generated based on the second codeword set.

In another example, the precoding matrix information includes an identifier of the precoding matrix corresponding to the channel state, in the second codeword set. Since the number of codewords in the second codeword set is less than the number of codewords in the first codeword set, the resource overhead for the identifier of the precoding matrix in the second codeword set is less than the resource overhead for the identifier of the precoding matrix in the first codeword set, so that the first node generating the precoding matrix information based on the second codeword set, compared to generating the precoding matrix information based on the first codeword set, reduces the resource overhead for the first node to transmit the precoding matrix information generated based on the second codeword set.

In addition, since the number of matrices in the second codeword set is less than the number of matrices in the first codeword set, the first node generating the precoding matrix information based on the second codeword set may reduce the calculation amount of the first node, and reduce the complexity of the system.

It should be noted that, due to the mobility of wireless communication, a wireless channel scenario changes, so that adopting a fixed codeword set is difficult to adapt to the changing channel scenario. Then, the first codeword set that is more adapted to the channel scenario is obtained by receiving the first information from the second node. In addition, in a period of time, in a case where a moving range of the node is smaller, the precoding matrix may be determined from a smaller range, and in this case, the present disclosure may provide second information to indicate a second codeword set, and the second codeword set is also adapted to the channel scenario. The second codeword set is a subset of the first codeword set, and the number of codewords in the second codeword set is less than the number of codewords in the first codeword set. Thus, compared to the resource overhead of the precoding matrix information directly generated based on the first codeword set, the first node generates the precoding matrix information based on the second codeword set, and the resource overhead for carrying the precoding matrix information generated based on the second codeword set is reduced. Moreover, since the number of matrices in the second codeword set is smaller, the calculation amount for the first node to generate the precoding matrix information based on the second codeword set is also reduced, thereby reducing the complexity of the system.

In an implementation, the second codeword set is determined by the second node, and the first node receives second information from the second node. The second information is used to indicate a second codeword set, and the second codeword set is a subset of the first codeword set.

In some embodiments, the second information is used to indicate an index number, in the first codeword set, of a matrix in the second codeword set.

Exemplarily, the second information is used to indicate an index number, in the first codeword set, of a matrix in the second codeword set, so that the second codeword set may be obtained from the first codeword set based on the index number.

In some embodiments, the second information satisfies any one of: the second information including a starting index number and a number of codewords, and index numbers of matrices in the second codeword set being continuous; the second information including a starting index number and an ending index number, and index numbers of matrices in the second codeword set being continuous; the second information including a starting index number, a spacing value, and a number of codewords. The spacing value is a spacing value between any two adjacent index numbers among a plurality of index numbers corresponding to the second codeword set.

In an example, the second information may be an integer group, and index numbers of matrices in the second codeword set are continuous. The integer group of the second information includes a first integer and a second integer. The first integer is used to indicate a starting value of the index numbers, in the first codeword set, of the codewords in the second codeword set, and the second integer is used to indicate the number of codewords in the second codeword set. It should be understood that, the second codeword set may be indicated by using an integer group of the second information, or by only using 2 integers, and compared to using the second information to transmit the codewords in the second codeword set, the resource overhead may be saved.

In another example, the second information may be an integer group, and the index numbers of the matrices in the second codeword set are continuous. The integer group of the second information includes a first integer and a third integer. The first integer is used to indicate a starting value of the index numbers, in the first codeword set, of the codewords in the second codeword set, and the third integer is used to indicate an ending value of the index numbers, in the first codeword set, of the codewords in the second codeword set. It should be understood that, the second codeword set may be indicated by using an integer group of the second information, or by only using 2 integers, in this way, compared to using the second information to transmit the codewords in the second codeword set, the resource overhead may be saved.

In yet another example, the second information may be an integer group, and the index numbers of the matrices in the second codeword set are continuous. The integer group of the second information includes a first integer, a second integer and a fourth integer. The first integer is used to indicate a starting value of the index numbers, in the first codeword set, of the codewords in the second codeword set, the second integer is used to indicate the number of codewords in the second codeword set, and the fourth integer is used to indicate a spacing value between every two adjacent index numbers, among the index numbers, in the first codeword set, of the codewords in the second codeword set. It should be understood that, the second codeword set may be indicated by using an integer group of the second information, or by only using 3 integers, in this way, compared to using the second information to transmit the codewords in the second codeword set, the resource overhead may be saved.

That is, the index numbers, in the first codeword set, of the matrices in the second codeword set may be continuous, incontinuous or equally spaced. It should be understood that, continuous index numbers or equally spaced index numbers have regularity and are convenient to express, so that the resource overhead for indicating the continuous index numbers or the equally spaced index numbers is small, thereby reducing the resource overhead of the system.

In some embodiments, the second information satisfies any one of: the second information being used to indicate a plurality of subsets in the first codeword set, and the plurality of subsets constituting the second codeword set; the second information including at least one integer element, and the second codeword set being generated from the at least one integer element through a generation method for the first codeword set; the second information including information used to indicate an identifier of the second codeword set; the second information including an identifier of the second codeword set, and the second codeword set being generated from the identifier of the second codeword set through a generation method for the first codeword set; the second information including an identifier of a cell corresponding to the second codeword set, and the second codeword set being generated from the identifier of the cell through a generation method for the first codeword set; the second information including a reference codeword and a similarity range, and a similarity between a matrix in the second codeword set and the reference codeword being within the similarity range; the second information including a similarity range, and a similarity between a matrix in the second codeword set and a channel state matrix being within the similarity range; the second information including a reference codeword and/or a similarity reference value, and the second codeword set being generated from the reference codeword and/or the similarity reference value through a generation method for the first codeword set.

Exemplarily, the second information may at least include the following 8 examples.

Example 1: the second information is used to indicate a plurality of subsets in the first codeword set, and the plurality of subsets constitute the second codeword set.

The second information indicates a plurality of integer groups, each integer group indicates a subset in the first codeword set, and the plurality of subsets indicated by the plurality of integer groups constitute the second codeword set. That is, the second information may indicate the second codeword set by indicating the plurality of integer groups. It should be understood that, compared to using the second information to transmit the codewords in the second codeword set, this example only uses the integer groups of the second information to indicate the second codeword set, which may save resource overhead.

Example 2: the second information includes at least one integer element, and the second codeword set is generated from the at least one integer element through a generation method for the first codeword set.

The second information includes an integer set, and the integer set includes at least one integer element, and the second codeword set is generated from the at least one integer element through a generation method for the first codeword set. That is, based on the generation method for the first codeword set, an integer element in the integer set of the second information may indicate a matrix in the second codeword set, and then the at least one integer element in the integer set may indicate the second codeword set.

For example, taking the generation method for generating the first codeword set being a function for generating the first codeword set as an example, an integer element in the integer set included in the second information may be an input of the function, and in this case, an output corresponding to the function is a matrix in the second codeword set. Thus, based on the function, each matrix in the second codeword set may be obtained by taking each integer element in the integer set as the input of the function.

For another example, taking the generation method for generating the first codeword set being a machine learning model for generating the first codeword set as an example, an integer element in the integer set included in the second information may be an input of the machine learning model, and in this case, an output corresponding to the machine learning model is a matrix in the second codeword set. Thus, based on the machine learning model, each matrix in the second codeword set may be obtained by taking each integer element in the integer set as the input of the machine learning model.

Example 3: the second information includes information used to indicate an identifier of the second codeword set.

The second information may also include an integer set, and the identifier of the second codeword set may be mapped to the integer set, so that the second codeword set may be indicated by the integer set of the second information.

Example 4: the second information includes an identifier of the second codeword set, and the second codeword set is generated from the identifier of the second codeword set through the generation method for the first codeword set.

That is, the second information includes the identifier of the second codeword set, and based on the generation method for generating the first codeword set, the second codeword set is indicated by the identifier of the second codeword set.

For example, taking the generation method for generating the first codeword set being a function for generating the first codeword set as an example, the identifier of the second codeword set included in the second information may be an input of the function, and in this case, an output corresponding to the function is a matrix in the second codeword set. Thus, based on the function, each matrix in the second codeword set may be obtained by taking each identifier in the second information as the input of the function.

For another example, taking the generation method for generating the first codeword set being a machine learning model for generating the first codeword set as an example, the identifier included in the second information may be an input of the machine learning model, and in this case, an output corresponding to the machine learning model is a matrix in the second codeword set. Thus, based on the machine learning model, each matrix in the second codeword set may be obtained by taking each identifier in the second information as the input of the machine learning model.

Example 5: the second information includes an identifier of a cell corresponding to the second codeword set, and the second codeword set is generated from the identifier of the cell through the generation method for the first codeword set.

The above cell refers to a cell corresponding to the second codeword set in a communication system using a precoding-based technology, that is, a matrix in the second codeword set may be used as a precoding matrix in the cell. In addition, the cell may also be referred to as a cellular, and in a wireless communication network, the cell is a geographical region covered by one or more base stations, used to provide wireless communication services.

The second information includes the identifier of the cell corresponding to the second codeword set, that is, the second codeword set may be indicated by the above identifier of the cell based on the generation method for generating the first codeword set.

For example, taking the generation method for generating the first codeword set being a function for generating the first codeword set as an example, the identifier of the cell corresponding to the second codeword set included in the second information may be an input of the function, and in this case, an output corresponding to the function is a matrix in the second codeword set. Thus, based on the function, each matrix in the second codeword set may be obtained by taking each identifier in the second information as the input of the function.

For another example, taking the generation method for generating the first codeword set being a machine learning model for generating the first codeword set as an example, the identifier of the cell corresponding to the second codeword set included in the second information may be an input of the machine learning model, and in this case, an output corresponding to the machine learning model is a matrix in the second codeword set. Thus, based on the machine learning model, each matrix in the second codeword set may be obtained by taking each identifier in the second information as the input of the machine learning model.

Example 6: the second information includes a reference codeword and a similarity range, and a similarity between a matrix in the second codeword set and the reference codeword is within the similarity range.

Exemplarily, the second information may include a reference codeword and a similarity threshold, and the second codeword set is composed of codewords in the first codeword set with a similarity to the reference codeword satisfying the similarity threshold. The reference codeword may be determined based on the channel state, and in this way, the second codeword set matching the channel state and satisfying a performance requirement may be indicated by the second information, based on the similarity threshold, and then a precoding matrix matching the channel and satisfying the performance requirement is acquired.

In an example, the similarity may be represented by a first metric value. The smaller a first metric value between a matrix in the second codeword set and the reference codeword is, the higher the similarity between the matrix and the reference codeword is; correspondingly, the larger the first metric value between the matrix in the second codeword set and the reference codeword is, the lower the similarity between the matrix and the reference codeword is. For example, the first metric value may be a distance between matrices, including a first norm distance of the matrices, a second norm distance of the matrices, a chordal distance of the matrices, etc. The smaller the distance between the matrix in the second codeword set and the reference codeword is, the higher the similarity between the matrix and the reference codeword is; correspondingly, the larger the distance between the matrix in the second codeword set and the reference codeword is, the lower the similarity between the matrix and the reference codeword is.

In another example, the similarity may be represented by a second metric value. The larger the second metric value between the matrix in the second codeword set and the reference codeword is, the higher the similarity between the matrix and the reference codeword is; correspondingly, the smaller the second metric value between the matrix in the second codeword set and the reference codeword is, the lower the similarity between the matrix and the reference codeword is. For example, the second metric value may be a parameter, such as a projection value between the matrices, an inner product between the matrices, a cosine similarity between the matrices, or a power of the cosine similarity between the matrices.

Example 7: the second information includes a similarity range, and a similarity between a matrix in the second codeword set and a channel state matrix is within the similarity range.

Exemplarily, the second information may include a channel state matrix and a similarity threshold, and the second codeword set is composed of codewords in the first codeword set with a similarity to the channel state matrix satisfying the similarity threshold. In this way, the second codeword set matching the channel state and satisfying a performance requirement may be indicated by the second information based on the similarity threshold, and then a precoding matrix matching the channel and satisfying the performance requirement is acquired.

In an example, the similarity may be represented by a first metric value. The smaller the first metric value between the matrix in the second codeword set and the channel state matrix is, the higher the similarity between the matrix and the channel state matrix is; correspondingly, the larger the first metric value between the matrix in the second codeword set and the channel state matrix is, the lower the similarity between the matrix and the channel state matrix is. For example, the first metric value may be a distance between the matrices, including a first norm distance of the matrices, a second norm distance of the matrices, a chordal distance of the matrices, etc. The smaller the distance between the matrix in the second codeword set and the channel state matrix is, the higher the similarity between the matrix and the channel state matrix is; correspondingly, the larger the distance between the matrix in the second codeword set and the channel state matrix is, the lower the similarity between the matrix and the channel state matrix is.

In another example, the similarity may be represented by a second metric value. The larger the first metric value between the matrix in the second codeword set and the channel state matrix is, the higher the similarity between the matrix and the channel state matrix is; correspondingly, the smaller the first metric value between the matrix in the second codeword set and the channel state matrix is, the lower the similarity between the matrix and the channel state matrix is. For example, the second metric value may be a parameter, such as a projection value between the matrices, an inner product between the matrices, a cosine similarity between the matrices, or a power of the cosine similarity between the matrices.

Example 8: the second information includes a reference codeword and/or a similarity reference value, and the second codeword set is generated from the reference codeword and/or the similarity reference value through the generation method for the first codeword set.

In an example, the second information includes a reference codeword, and the second codeword set is generated from the reference codeword through the generation method for the first codeword set, that is, the reference codeword indicates the second codeword set, based on the method of generating the first codeword set. In this way, the second codeword set matching the channel state and satisfying a performance requirement may be indicated by the second information, and then a precoding matrix matching the channel and satisfying the performance requirement is acquired.

For example, the generation method for generating the first codeword set is a function for generating the first codeword set, the above reference codeword may be used as an input of the function, and in this case, an output corresponding to the function is a matrix in the second codeword set, so that the second codeword set may be obtained based on the function and the reference codeword.

For another example, the generation method for generating the first codeword set is a machine learning model for generating the first codeword set, the above reference codeword may be an input of the machine learning model, and in this case, an output corresponding to the machine learning model is a matrix in the second codeword set, so that the second codeword set may be obtained based on the machine learning model and the reference codeword.

In another example, the second information includes a similarity reference value, and the second codeword set is generated from the similarity reference value through the generation method for the first codeword set, that is, the similarity reference value indicates the second codeword set based on the method of generating the first codeword set. In this way, the second codeword set matching the channel state and satisfying a performance requirement may be indicated by the second information, and then a precoding matrix matching the channel and satisfying the performance requirement is acquired.

For example, the generation method for generating the first codeword set is a function for generating the first codeword set, the above similarity reference value may be used as an input of the function, and in this case, an output corresponding to the function is a matrix in the second codeword set, so that the second codeword set may be obtained based on the function and the similarity reference value.

For another example, the generation method for generating the first codeword set is a machine learning model for generating the first codeword set, the above similarity reference value may be used as an input of the machine learning model, and in this case, an output corresponding to the machine learning model is a matrix in the second codeword set, so that the second codeword set may be obtained based on the machine learning model and the similarity reference value.

In yet another example, the second information includes a reference codeword and a similarity reference value, and the second codeword set is generated from the reference codeword and the similarity reference value through the generation method for the first codeword set, that is, the reference codeword and the similarity reference value indicate the second codeword set based on the method of generating the first codeword set. In this way, the second codeword set matching the channel state and satisfying a performance requirement may be indicated by the second information, and then a precoding matrix matching the channel and satisfying the performance requirement is acquired.

For example, the generation method for generating the first codeword set is a function for generating the first codeword set, the above reference codeword and similarity reference value may be used as an input of the function, and in this case, an output corresponding to the function is a matrix in the second codeword set, so that the second codeword set may be obtained based on the function, and the reference codeword and the similarity reference value.

For another example, the generation method for generating the first codeword set is a machine learning model for generating the first codeword set, the above reference codeword and the similarity reference value may be an input of the machine learning model, and in this case, an output corresponding to the machine learning model is a matrix in the second codeword set, so that the second codeword set may be obtained based on the machine learning model, and the reference codeword and the similarity reference value.

It should be noted that, the embodiments provided in the present disclosure indicate the first codeword set by the first information, and indicate the second codeword set based on the first codeword set by the second information, and for example, indicate the second codeword set by indicating an identifier, an index number of the second codeword set, or indicating an index number, in the first codeword set, of a codeword in the second codeword set. That is, the second information may include the identifier of the second codeword set, the index number of the second codeword set, the index number, in the first codeword set, of the codeword in the second codeword set, or the identifier, in the first codeword set, of a codeword in the second codeword set, etc. In this way, the resource overhead for frequently and directly transmitting the second codeword set may be reduced.

Then, the first node may send the precoding matrix information to the second node according to the second codeword set indicated by the second information and the channel state between the first node and the second node.

The first node may determine a matrix that best matches the channel state as the precoding matrix, among matrices included in the second codeword set, according to the channel state between the first node and the second node, and send the precoding matrix information to the second node based on the determined precoding matrix.

Exemplarily, the implementation of the first node sending the precoding matrix information to the second node may include: the first node sends an index number of the precoding matrix or an identifier of the precoding matrix to the second node. The identifier of the precoding matrix is used to identify the precoding matrix, and the identifier may be a symbol, a symbol string, or a combination of a character string and an index number. In this way, compared to the resource overhead of directly sending the precoding matrix, the resource overhead for transmitting the identifier or the index number of the precoding matrix is smaller, which may save the resource overhead for the system to acquire the precoding matrix information.

In some embodiments, the first node may further send a component element of a codeword of the precoding matrix, or an identifier of the component element, or an index number of the component element to the second node, to indicate the precoding matrix information to the second node.

In another implementation, the second codeword set is determined by the first node, and the first node may send second information to the second node, where the second information is used to indicate the second codeword set.

The explanation of the second information may refer to the related description of the second information in the above implementations, and will not be repeated here.

Moreover, the first node may send the precoding matrix information to the second node according to the second codeword set and the channel state between the first node and the second node. The second codeword set is a subset of the first codeword set.

In some embodiments, the first node may further receive third information, and determine the second codeword set through the third information. The third information includes a similarity reference value, and the second information includes a reference codeword. In this case, the second codeword set is generated from the reference codeword and the similarity reference value through the generation method for the first codeword set. Alternatively, the third information includes a similarity range, and a similarity between a matrix in the second codeword set and the reference codeword is within the similarity range. That is, the second codeword set is indicated by the reference codeword and the reference similarity, based on the method of generating the first codeword set. In this way, the second codeword set matching the channel state and satisfying a performance requirement may be indicated by the third information, and then a precoding matrix matching the channel and satisfying the performance requirement is acquired.

For example, the generation method for generating the first codeword set is a function for generating the first codeword set, the above reference codeword and similarity reference value may be used as an input of the function, and in this case, an output corresponding to the function is a matrix in the second codeword set, so that the second codeword set may be obtained based on the function, and the reference codeword and the similarity reference value.

For another example, the generation method for generating the first codeword set is a machine learning model for generating the first codeword set, the above reference codeword and similarity reference value may be used as an input of the machine learning model, and in this case, an output corresponding to the machine learning model is a matrix in the second codeword set, so that the second codeword set may be obtained based on the machine learning model, and the reference codeword and the similarity reference value.

In some embodiments, the above third information may further include a similarity range. For example, the similarity range is a similarity threshold, that is, the third information includes a similarity threshold, and the third information includes the reference codeword, so that codewords in the first codeword set with a similarity to the reference codeword satisfying the threshold constitute the second codeword set. In this way, the second codeword set matching the channel state and satisfying a performance requirement may be indicated by the third information, and then a precoding matrix matching the channel and satisfying the performance requirement is acquired.

In some embodiments, the first node may further receive fourth information. Further, the first node may generate the second information based on the fourth information.

The second information is determined based on the fourth information, and the fourth information includes at least one of: configuration information of a downlink reference signal resource; resource information required for sending the precoding matrix information to the second node; a similarity reference value; a similarity range.

In some embodiments, the first node may further send a similarity between the precoding matrix and a channel state matrix to the second node.

The above channel state matrix may be a channel state matrix obtained by the first node based on measurement of a reference signal transmitted from the second node. It should be noted that, the first node further reports the similarity between the precoding matrix and the channel state matrix to the second node, which may reflect the performance of the precoding matrix generated based on the first codeword set or the second codeword set, to the second node. Thus, the matching degree between the first codeword set, the second codeword set and the channel state scenario may be reflected, thereby providing a basis for the second node to determine whether the first codeword set and the second codeword set should be updated, which may improve the performance of the system.

In some embodiments, the first node may further send fifth information to the second node. The fifth information is used to indicate whether the first codeword set needs to be updated.

For example, the first node may determine whether the first codeword set matches the channel state scenario, according to the similarity between the channel state matrix obtained by the measurement of the reference signal transmitted from the second node and the determined precoding matrix, so as to send the fifth information to the second node, that is, to propose a suggestion, to improve the performance of the system.

For another example, the first node may determine whether the first codeword set matches the channel state scenario according to the accuracy of the precoding matrix, so as to send the fifth information to the second node, that is, to propose a suggestion, to improve the performance of the system.

Based on the technical solutions provided in the present disclosure, the first node may determine the precoding matrix, base on the codeword set indicated by the first information, based on the first information from the second node; the first codeword set may be a codeword set adapted to a channel scenario, that is determined by the second node based on the channel scenario where it is located or a channel state in the channel scenario, so that the precoding matrix determined from the first codeword set based on the channel state matches the channel state, thereby improving the accuracy of the precoding matrix. Moreover, the codeword set may also be updated by the first information, so as to flexibly and efficiently determine the precoding matrix to adapt to the suddenly changed channel state.

In some embodiments, as shown in FIG. 3, the present disclosure further provides a method for receiving precoding matrix information, applied to a second node. The method for receiving precoding matrix information includes the following S201 and S202.

In S201: the second node sends first information to a first node. The first information is used to indicate a first codeword set, and the first codeword set includes at least one matrix.

In some embodiments, the first information including the first codeword set, includes at least one of: the first information including elements in the first codeword set; the first information including information used to indicate a generation method for the first codeword set; the first information including a generation method for the first codeword set.

In some embodiments, the generation method for the first codeword set includes: a function for generating the first codeword set; or, a machine learning model for generating the first codeword set. An input set of the function or the machine learning model includes a random number set or a continuous integer set or an integer set, and an output set of the function or the machine learning model is used to determine the first codeword set.

In S202: the second node receives precoding matrix information sent from the first node; the precoding matrix information is determined based on the first codeword set and a channel state between the first node and the second node.

In some embodiments, the above precoding matrix information is determined based on a second codeword set and the channel state between the first node and the second node; the precoding matrix information includes an index number or an identifier of a precoding matrix corresponding to the channel state, in the second codeword set, and the second codeword set is a subset of the first codeword set.

In some embodiments, the second node may further send second information to the first node; the second information is used to indicate the second codeword set.

In some embodiments, the second node may further receive second information from the first node; the second information is used to indicate the second codeword set.

In some embodiments, the second information is used to indicate an index number, in the first codeword set, of a matrix in the second codeword set.

In some embodiments, the second information satisfies any one of: the second information including a starting index number and a number of codewords, and index numbers of matrices in the second codeword set being continuous; the second information including a starting index number and an ending index number, and index numbers of matrices in the second codeword set being continuous; the second information including a starting index number, a spacing value, and a number of codewords. The spacing value is a spacing value between any two adjacent index numbers among a plurality of index numbers corresponding to the second codeword set.

In some embodiments, the second information satisfies any one of: the second information being used to indicate a plurality of subsets in the first codeword set, and the plurality of subsets constituting the second codeword set; the second information including at least one integer element, and the second codeword set being generated from the at least one integer element through a generation method for the first codeword set; the second information including information used to indicate an identifier of the second codeword set; the second information including an identifier of the second codeword set, and the second codeword set being generated from the identifier of the second codeword set through a generation method for the first codeword set; the second information including an identifier of a cell corresponding to the second codeword set, and the second codeword set being generated from the identifier of the cell through a generation method for the first codeword set; the second information including a reference codeword and a similarity range, and a similarity between a matrix in the second codeword set and the reference codeword being within the similarity range; the second information including a similarity range, and a similarity between a matrix in the second codeword set and a channel state matrix being within the similarity range; the second information including a reference codeword and/or a similarity reference value, and the second codeword set being generated from the reference codeword and/or the similarity reference value through a generation method for the first codeword set.

In some embodiments, the second information includes a reference codeword, and the second node may further send third information to the first node; the third information includes a similarity reference value. The second codeword set is generated from the reference codeword and the similarity reference value through the generation method for the first codeword set; or, the third information includes a similarity range, and a similarity between a matrix in the second codeword set and the reference codeword is within the similarity range.

In some embodiments, the second node may further send fourth information to the first node; the second information is determined based on the fourth information. The fourth information includes at least one of: configuration information of a downlink reference signal resource; resource information required for sending the precoding matrix information to the second node; a similarity reference value; a similarity range.

In some embodiments, the second node may further receive a similarity between the precoding matrix and a channel state matrix from the first node.

In some embodiments, the second node may further receive fifth information from the first node; the fifth information is used to indicate whether the first codeword set needs to be updated.

In addition, for the detailed description of S201 and S202, reference may also be made to the related description of the above S101 and S102, which will not be repeated here.

Based on the technical solutions provided in the present disclosure, the second node may send first information to the first node, to indicate a codeword set by the first information, so that the first node may determine a precoding matrix based on the codeword set indicated by the first information; the first codeword set may be a codeword set that is determined by the second node based on a channel scenario where it is located or a channel state in the channel scenario and is adapted to the channel scenario, so that the precoding matrix determined from the first codeword set based on the channel state matches the channel state, thereby improving the accuracy of the precoding matrix.

The above mainly introduces the solutions provided in the present disclosure from a perspective of interaction between various communication nodes. It may be understood that, to implement the above functions, each node (e.g., apparatus or device) includes corresponding hardware structures and/or software modules for performing each function. Those skilled in the art should easily realize that the present disclosure may be implemented in the form of hardware or a combination of hardware and computer software, in conjunction with algorithms and steps described in the embodiments disclosed in the present disclosure. Whether a certain function is performed by hardware or computer software driving hardware depends on the specific applications and design constraints of the technical solutions. Professional technicians may use different methods to implement the described functions, for each specific application, but such an implementation should not be considered beyond the scope of the present disclosure.

In the embodiments of the present disclosure, the communication apparatus may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical function division, and there may be other division methods in actual implementations. The example in which each functional module may be divided corresponding to each function is taken for explanation below.

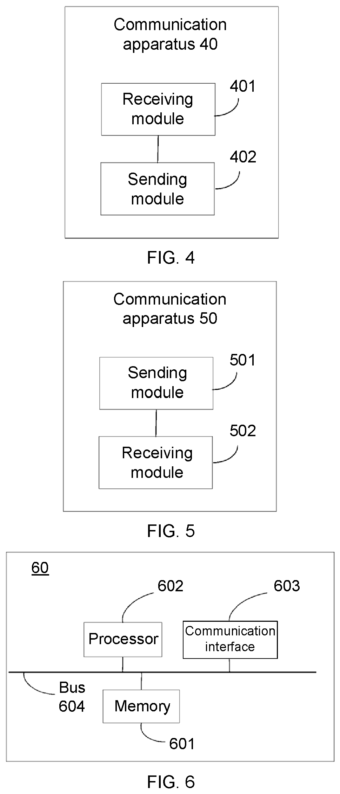

FIG. 4 shows a compositional schematic diagram of a communication apparatus according to the embodiments of the present disclosure, and the communication apparatus is applied to a first node. As shown in FIG. 4, the communication apparatus 40 includes a receiving module 401 and a sending module 402.

The receiving module 401 is configured to receive first information from a second node. The first information is used to indicate a first codeword set, and the first codeword set includes at least one matrix.

The sending module 402 is configured to send the precoding matrix information to the second node according to the first codeword set and a channel state between the first node and the second node. The precoding matrix information is used to indicate a precoding matrix corresponding to the channel state, in the codeword set.

In some embodiments, the first information including the first codeword set, includes at least one of: the first information including elements in the first codeword set; the first information including information used to indicate a generation method for the first codeword set; the first information including a generation method for the first codeword set.

In some embodiments, the generation method for the first codeword set includes: a function for generating the first codeword set; a machine learning model for generating the first codeword set. An input set of the function or the machine learning model includes a random number set or a continuous integer set or an integer set, and an output set of the function or the machine learning model is used to determine the first codeword set.

In some embodiments, the sending module 402 is, for example, configured to send the precoding matrix information to the second node according to a second codeword set and the channel state between the first node and the second node. The precoding matrix information includes an index number or an identifier of a precoding matrix corresponding to the channel state, in the second codeword set, and the second codeword set is a subset of the first codeword set.

In some embodiments, the receiving module 401 is further configured to receive second information from the second node. The second information is used to indicate the second codeword set.

In some embodiments, the sending module 402 is further configured to send second information to the second node. The second information is used to indicate the second codeword set.

In some embodiments, the second information is used to indicate an index number, in the first codeword set, of a matrix in the second codeword set.

In some embodiments, the second information satisfies any one of: the second information including a starting index number and a number of codewords, and index numbers of matrices in the second codeword set being continuous; the second information including a starting index number and an ending index number, and index numbers of matrices in the second codeword set being continuous; the second information including a starting index number, a spacing value, and a number of codewords; where the spacing value is a spacing value between any two adjacent index numbers among a plurality of index numbers corresponding to the second codeword set.

In some embodiments, the second information satisfies any one of: the second information being used to indicate a plurality of subsets in the first codeword set, and the plurality of subsets constituting the second codeword set; the second information including at least one integer element, and the second codeword set being generated from the at least one integer element through a generation method for the first codeword set; the second information including information used to indicate an identifier of the second codeword set; the second information including an identifier of the second codeword set, and the second codeword set being generated from the identifier of the second codeword set through a generation method for the first codeword set; the second information including an identifier of a cell corresponding to the second codeword set, and the second codeword set being generated from the identifier of the cell through a generation method for the first codeword set; the second information including a reference codeword and a similarity range, and a similarity between a matrix in the second codeword set and the reference codeword being within the similarity range; the second information including a similarity range, and a similarity between a matrix in the second codeword set and a channel state matrix being within the similarity range; the second information including a reference codeword and/or a similarity reference value, and the second codeword set being generated from the reference codeword and/or the similarity reference value through a generation method for the first codeword set.

In some embodiments, the second information includes a reference codeword, and the receiving module 401 is further configured to receive third information. The third information includes a similarity reference value, and the second codeword set is generated from the reference codeword and the similarity reference value through a generation method for the first codeword set. Alternatively, the third information includes a similarity range, and a similarity between a matrix in the second codeword set and the reference codeword is within the similarity range.

In some embodiments, the receiving module 401 is further configured to receive fourth information; the second information is determined based on the fourth information. The fourth information includes at least one of: configuration information of a downlink reference signal resource; resource information required for sending the precoding matrix information to the second node; a similarity reference value; a similarity range.

In some embodiments, the sending module 402 is further configured to send a similarity between the precoding matrix and a channel state matrix to the second node.

In some embodiments, the sending module 402 is further configured to send fifth information to the second node. The fifth information is used to indicate whether the first codeword set needs to be updated.

For more detailed descriptions of the above receiving module 401 and sending module 402, as well as more detailed descriptions of the technical features and descriptions of beneficial effects, etc., reference may be made to the above corresponding method embodiment parts, which will not be repeated here.

FIG. 5 shows a compositional schematic diagram of another communication apparatus according to the embodiments of the present disclosure. As shown in FIG. 5, the communication apparatus 50 includes a sending module 501 and a receiving module 502.

The sending module 501 is configured to send first information to a first node. The first information is used to indicate a first codeword set, and the first codeword set includes at least one matrix.

The receiving module 502 is configured to receive precoding matrix information sent from the first node. The precoding matrix information is determined based on the first codeword set and a channel state between the first node and the second node.

In some embodiments, the first information including the first codeword set, includes at least one of: the first information including elements in the first codeword set; the first information including information used to indicate a generation method for the first codeword set; the first information including a generation method for the first codeword set.

In some embodiments, the generation method for the first codeword set includes: a function for generating the first codeword set; a machine learning model for generating the first codeword set. An input set of the function or the machine learning model includes a random number set or a continuous integer set or an integer set, and an output set of the function or the machine learning model is used to determine the first codeword set.

In some embodiments, the precoding matrix information is determined based on a second codeword set and the channel state between the first node and the second node. The precoding matrix information includes an index number or an identifier of a precoding matrix corresponding to the channel state, in the second codeword set, and the second codeword set is a subset of the first codeword set.

In some embodiments, the sending module 501 is further configured to send second information to the first node. The second information is used to indicate the second codeword set.

In some embodiments, the receiving module 502 is further configured to receive second information from the first node. The second information is used to indicate the second codeword set.

In some embodiments, the second information is used to indicate an index number, in the first codeword set, of a matrix in the second codeword set.

In some embodiments, the second information satisfies any one of: the second information including a starting index number and a number of codewords, and index numbers of matrices in the second codeword set being continuous; the second information including a starting index number and an ending index number, and index numbers of matrices in the second codeword set being continuous; the second information including a starting index number, a spacing value, and a number of codewords; where the spacing value is a spacing value between any two adjacent index numbers among a plurality of index numbers corresponding to the second codeword set.

In some embodiments, the second information satisfies any one of: the second information being used to indicate a plurality of subsets in the first codeword set, and the plurality of subsets constituting the second codeword set; the second information including at least one integer element, and the second codeword set being generated from the at least one integer element through a generation method for the first codeword set; the second information including information used to indicate an identifier of the second codeword set; the second information including an identifier of the second codeword set, and the second codeword set being generated from the identifier of the second codeword set through a generation method for the first codeword set; the second information including an identifier of a cell corresponding to the second codeword set, and the second codeword set being generated from the identifier of the cell through a generation method for the first codeword set; the second information including a reference codeword and a similarity range, and a similarity between a matrix in the second codeword set and the reference codeword being within the similarity range; the second information including a similarity range, and a similarity between a matrix in the second codeword set and a channel state matrix being within the similarity range; the second information including a reference codeword and/or a similarity reference value, and the second codeword set being generated from the reference codeword and/or the similarity reference value through a generation method for the first codeword set.

In some embodiments, the second information includes a reference codeword, and the sending module 501 is further configured to send third information to the first node. The third information includes a similarity reference value; the second codeword set is generated from the reference codeword and the similarity reference value through a generation method for the first codeword set; or, the third information includes a similarity range, and a similarity between a matrix in the second codeword set and the reference codeword is within the similarity range.

In some embodiments, the sending module 501 is further configured to send fourth information to the first node; the second information is determined based on the fourth information. The fourth information includes at least one of: configuration information of a downlink reference signal resource; resource information required for sending the precoding matrix information to the second node; a similarity reference value; a similarity range.

In some embodiments, the receiving module 502 is further configured to receive a similarity between the precoding matrix and a channel state matrix from the first node.

In some embodiments, the receiving module 502 is further configured to receive fifth information from the first node; the fifth information is used to indicate whether the first codeword set needs to be updated.

For more detailed descriptions of the above sending module 501 and receiving module 502, as well as more detailed descriptions of the technical features and descriptions of beneficial effects, etc., reference may be made to the above corresponding method embodiment parts, which will not be repeated here.

It should be noted that, the modules in FIG. 4 or FIG. 5 may also be referred to as units, and for example, the processing module may be referred to as a processing unit. In addition, in the embodiments shown in FIG. 4 or FIG. 5, the names of the modules may not be the names shown in the figures, and for example, the sending module or the receiving module may also be referred to as a communication module.

If each unit in FIG. 4 or FIG. 5 is implemented in the form of a software functional module, and sold or used as a separate product, the unit may be stored in a computer readable storage medium. Based on this understanding, the technical solutions of the embodiments of the present disclosure may be essentially, or a part of the technical solutions that contributes to the related art, or a part of all of the technical solutions, may be embodied in the form of a software product, and the computer software product is stored in a storage medium, and includes a plurality of instructions to cause a computer device (which may be a personal computer, a server, a network device, etc.) or processor to perform a part or all of the steps of the methods of various embodiments of the present disclosure. The storage medium storing the computer software product includes various types of media capable of storing program codes, such as a U disk (USB flash disk), a mobile hard disk, a read-only memory (ROM), a random access memory (RAM), a magnetic disk, or an optical disk, etc.

In a case where the functions of the above integrated modules are implemented in the form of hardware, the embodiments of the present disclosure provide a structural schematic diagram of yet another communication apparatus. As shown in FIG. 6, the communication apparatus 60 includes: a processor 602, a communication interface 603, and a bus 604. In some embodiments, the communication apparatus 60 may further include a memory 601.

The processor 602 may implement or execute various illustrative logical blocks, modules and circuits described in conjunction with the contents of the present disclosure. The processor 602 may be a central processing unit, a general-purpose processor, a digital signal processor, an application specific integrated circuit, a field programmable gate array or any other programmable logic device, a transistor logic device, a hardware component, or any combination thereof, which may implement or execute various illustrative logical blocks, modules and circuits described in conjunction with the contents of the present disclosure. The processor 602 may also be a combination capable of implementing computing functions, for example, including a combination of one or more microprocessors, or a combination of a digital signal processor (DSP) and a microprocessor.

The communication interface 603 is configured to connect with other devices through a communication network. The communication network may be an Ethernet, a radio access network, a wireless local area network (WLAN), or the like.

The memory 601 may be a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure, but not limited thereto.

As an implementation, the memory 601 may exist independently of the processor 602, and the memory 601 may be connected to the processor 602 through the bus 604, for storing instructions or program codes. When calling and executing the instructions or the program codes stored in the memory 601, the processor 602 is capable of implementing the method provided in the embodiments of the present disclosure.

In another implementation, the memory 601 may also be integrated with the processor 602.

The bus 604 may be an extended industry standard architecture (EISA) bus or the like. The bus 604 may be classified into an address bus, a data bus, and a control bus, or the like. For the convenience of representation, only one thick line is used in FIG. 6 for representation, but it does not mean that there is only one bus or one type of bus.

From the description of the above embodiments, those skilled in the art can clearly understand that, for convenience and brevity of description, an illustration is only given by the division of functional modules mentioned above. In practical applications, the functions mentioned above may be allocated to be completed by different functional modules according to requirements. That is, the internal structure of the device or apparatus is divided into different functional modules to complete all or a part of the functions mentioned above.

The embodiments of the present disclosure further provide a computer-readable storage medium (e.g., a non-transitory computer storage medium). All or a part of the procedures in the method embodiments mentioned above may be completed by related hardware indicated by computer instructions, and the program may be stored in the computer-readable storage medium mentioned above. The program, when executed, may include the procedures of the method embodiments mentioned above. The computer readable storage medium may be a memory of any one of the aforementioned embodiments. The above-mentioned computer readable storage medium may also be an external storage device of the device or apparatus mentioned above, e.g., a plug-in hard disk, a smart memory card (smart media card, SMC), a secure digital (SD) card, a flash card, etc., equipped on the device or apparatus mentioned above. Furthermore, the computer-readable storage medium mentioned above may further include both an internal storage unit and an external storage device of the device or apparatus mentioned above. The computer-readable storage medium mentioned above is used to store the computer program mentioned above, and other programs and data required for the device or apparatus mentioned above. The computer-readable storage medium mentioned above may further be used to temporarily store data that has been output or is to be output.

The embodiments of the present disclosure further provide a computer program product, the computer product contains a computer program, the computer program product, when executed on a computer, causes the computer to perform any one of the methods provided in the above embodiments.

Based on the technical solutions provided in the present disclosure, the first node determines a precoding matrix based on a codeword set indicated by first information; the first codeword set may be a codeword set that is determined by the second node based on a channel scenario where it is located or a channel state in the channel scenario and is adapted to the channel scenario, so that the precoding matrix determined from the first codeword set based on the channel state matches the channel state, thereby improving the accuracy of the precoding matrix. Moreover, the codeword set may also be updated through the first information, so as to flexibly and efficiently determine the precoding matrix to adapt to the suddenly changed channel state.

Although the present disclosure is described herein in conjunction with respective embodiments, other variations of the disclosed embodiments may be understood and implemented by those skilled in the art by viewing the drawings, the disclosed content, and the attached claims, in the process of implementing the claimed processes of the present disclosure. In the claims, the word "comprise/comprises/comprising" does not exclude other components or steps, and "a/an" or "one" does not exclude multiple cases. A single processor or other unit may implement functions of several items listed in the claims. Although certain measures are recorded in dependent claims different from each other, it does not mean that these measures cannot be combined to exert a good effect.

Although the present disclosure is described in conjunction with specific features and embodiments thereof, it is apparent that various modifications and combinations may be made thereto without departing from the spirit and scope of the present disclosure. Accordingly, the specification and drawings are merely exemplary explanations of the present disclosure as defined by the attached claims and are deemed to cover any and all modifications, variations, combinations or equivalents thereof within the scope of the present disclosure. Obviously, those skilled in the art may make various changes and variations to the present disclosure without departing from the spirit and scope of the present disclosure. In this way, if these modifications and variations of the present disclosure fall within the scope of the claims of the present disclosure and their equivalent technologies, the present disclosure is also intended to include these modifications and variations therein.

The above is merely specific implementations of the present disclosure, but the protection scope of the present disclosure is not limited thereto. Any change or replacement within the technical scope disclosed in the present disclosure shall be included in the protection scope of the present disclosure. Therefore, the protection scope of the present disclosure should be based on the protection scope of the claims.

## Claims

1. A method for sending precoding matrix information, applied to a first node, wherein the method comprises:
receiving first information from a second node, wherein the first information is used to indicate a first codeword set, and the first codeword set comprises at least one matrix; and
sending the precoding matrix information to the second node according to the first codeword set and a channel state between the first node and the second node;
wherein the precoding matrix information is used to indicate a precoding matrix corresponding to the channel state, in the first codeword set.

2. The method according to claim 1, wherein the first information being used to indicate the first codeword set, comprises at least one of:
the first information comprising elements in the first codeword set;
the first information comprising information used to indicate a generation method for the first codeword set;
the first information comprising a generation method for the first codeword set.

3. The method according to claim 2, wherein the generation method for the first codeword set comprises:
generating by a function for the first codeword set; or
generating by a machine learning model for the first codeword set;
wherein an input set of the function or the machine learning model comprises a random number set or a continuous integer set or an integer set, and an output set of the function or the machine learning model is used to determine the first codeword set.

4. The method according to claim 1, wherein sending the precoding matrix information to the second node according to the first codeword set and the channel state between the first node and the second node, comprises:
sending the precoding matrix information to the second node according to a second codeword set and the channel state between the first node and the second node; wherein the precoding matrix information comprises an index number or an identifier of a precoding matrix corresponding to the channel state, in the second codeword set, and the second codeword set is a subset of the first codeword set.

5. The method according to claim 4, further comprising:
receiving second information from the second node, wherein the second information is used to indicate the second codeword set.

6. The method according to claim 4, further comprising:
sending second information to the second node, wherein the second information is used to indicate the second codeword set.

7. The method according to claim 5 or 6, wherein the second information is used to indicate an index number, in the first codeword set, of a matrix in the second codeword set.

8. The method according to claim 7, wherein the second information satisfies any one of:
the second information comprising a starting index number and a number of codewords, and index numbers of matrices in the second codeword set being continuous;
the second information comprising a starting index number and an ending index number, and index numbers of matrices in the second codeword set being continuous;
the second information comprising a starting index number, a spacing value, and a number of codewords;
wherein the spacing value is a spacing value between any two adjacent index numbers among a plurality of index numbers corresponding to the second codeword set.

9. The method according to claim 7, wherein the second information satisfies any one of:
the second information being used to indicate a plurality of subsets in the first codeword set, and the plurality of subsets constituting the second codeword set;
the second information comprising at least one integer element, and the second codeword set being generated from the at least one integer element through a generation method for the first codeword set;
the second information comprising information used to indicate an identifier of the second codeword set;
the second information comprising an identifier of the second codeword set, and the second codeword set being generated from the identifier of the second codeword set through a generation method for the first codeword set;
the second information comprising an identifier of a cell corresponding to the second codeword set, and the second codeword set being generated from the identifier of the cell through a generation method for the first codeword set;
the second information comprising a reference codeword and a similarity range, and a similarity between a matrix in the second codeword set and the reference codeword being within the similarity range;
the second information comprising a similarity range, and a similarity between a matrix in the second codeword set and a channel state matrix being within the similarity range;
the second information comprising a reference codeword and/or a similarity reference value, and the second codeword set being generated from the reference codeword and/or the similarity reference value through a generation method for the first codeword set.

10. The method according to claim 6, wherein the second information comprises a reference codeword, and the method further comprises:
receiving third information from the second node, wherein the third information comprises a similarity reference value, and the second codeword set is generated from the reference codeword and the similarity reference value through a generation method for the first codeword set; or, the third information comprises a similarity range, and a similarity between a matrix in the second codeword set and the reference codeword is within the similarity range.

11. The method according to claim 6, further comprising:
receiving fourth information from the second node, wherein the second information is determined based on the fourth information, and the fourth information comprises at least one of:
configuration information of a downlink reference signal resource;
resource information required for sending the precoding matrix information to the second node;
a similarity reference value;
a similarity range.

12. The method according to claim 1, further comprising:
sending a similarity between the precoding matrix and a channel state matrix to the second node.

13. The method according to claim 1, further comprising:
sending fifth information to the second node, wherein the fifth information is used to indicate whether the first codeword set needs to be updated.

14. A method for receiving precoding matrix information, applied to a second node, wherein the method comprises:
sending first information to a first node, wherein the first information is used to indicate a first codeword set, and the first codeword set comprises at least one matrix; and
receiving precoding matrix information sent from the first node, wherein the precoding matrix information is determined based on the first codeword set and a channel state between the first node and the second node.

15. The method according to claim 14, wherein the first information being used to indicate the first codeword set, comprises at least one of:
the first information comprising elements in the first codeword set;
the first information comprising information used to indicate a generation method for the first codeword set;
the first information comprising a generation method for the first codeword set.

16. The method according to claim 15, wherein the generation method for the first codeword set comprises:
generating by a function for the first codeword set; or generating by a machine learning model for the first codeword set;
wherein an input set of the function or the machine learning model comprises a random number set or a continuous integer set or an integer set, and an output set of the function or the machine learning model is used to determine the first codeword set.

17. The method according to claim 14, wherein the precoding matrix information is determined based on a second codeword set and the channel state between the first node and the second node; wherein the precoding matrix information comprises an index number or an identifier of a precoding matrix corresponding to the channel state, in the second codeword set, and the second codeword set is a subset of the first codeword set.

18. The method according to claim 17, further comprising:
sending second information to the first node, wherein the second information is used to indicate the second codeword set.

19. The method according to claim 17, further comprising:
receiving second information from the first node, wherein the second information is used to indicate the second codeword set.

20. The method according to claim 18 or 19, wherein the second information is used to indicate an index number, in the first codeword set, of a matrix in the second codeword set.

21. The method according to claim 20, wherein the second information satisfies any one of:
the second information comprising a starting index number and a number of codewords, and index numbers of matrices in the second codeword set being continuous;
the second information comprising a starting index number and an ending index number, and index numbers of matrices in the second codeword set being continuous;
the second information comprising a starting index number, a spacing value, and a number of codewords;
wherein the spacing value is a spacing value between any two adjacent index numbers among a plurality of index numbers corresponding to the second codeword set.

22. The method according to claim 20, wherein the second information satisfies any one of:
the second information being used to indicate a plurality of subsets in the first codeword set, and the plurality of subsets constituting the second codeword set;
the second information comprising at least one integer element, and the second codeword set being generated from the at least one integer element through a generation method for the first codeword set;
the second information comprising information used to indicate an identifier of the second codeword set;
the second information comprising an identifier of the second codeword set, and the second codeword set being generated from the identifier of the second codeword set through a generation method for the first codeword set;
the second information comprising an identifier of a cell corresponding to the second codeword set, and the second codeword set being generated from the identifier of the cell through a generation method for the first codeword set;
the second information comprising a reference codeword and a similarity range, and a similarity between a matrix in the second codeword set and the reference codeword being within the similarity range;
the second information comprising a similarity range, and a similarity between a matrix in the second codeword set and a channel state matrix being within the similarity range;
the second information comprising a reference codeword and/or a similarity reference value, and the second codeword set being generated from the reference codeword and/or the similarity reference value through a generation method for the first codeword set.

23. The method according to claim 19, wherein the second information comprises a reference codeword, and the method further comprises:
sending third information to the first node, wherein the third information comprises a similarity reference value, and the second codeword set is generated from the reference codeword and the similarity reference value through a generation method for the first codeword set; or, the third information comprises a similarity range, and a similarity between a matrix in the second codeword set and the reference codeword is within the similarity range.

24. The method according to claim 19, further comprising:
sending fourth information to the first node; wherein the second information is determined based on the fourth information, and the fourth information comprises at least one of:
configuration information of a downlink reference signal resource;
resource information required for sending the precoding matrix information to the second node;
a similarity reference value;
a similarity range.

25. The method according to claim 14, further comprising:
receiving a similarity between the precoding matrix and a channel state matrix from the first node.

26. The method according to claim 14, further comprising:
receiving fifth information from the first node, wherein the fifth information is used to indicate whether the first codeword set needs to be updated.

27. A communication apparatus, comprising: a memory and a processor; wherein the memory is coupled to the processor; the memory is configured to store instructions executable by the processor; and the processor, upon executing the instructions, performs the method according to any one of claims 1 to 26.

28. A computer-readable storage medium, wherein the computer-readable storage medium stores computer instructions, and when the computer instructions are run on a communication apparatus, the communication apparatus performs the method according to any one of claims 1 to 26.
